# EUROPÄISCHE PATENTSCHRIFT

(11) **EP 0 693 497 B1**
(45) Veröffentlichungstag und Bekanntmachung des Hinweises auf die Patenterteilung: **12.06.2002**
(21) Anmeldenummer: 95110891.9
(22) Anmeldetag: 12.07.1995
(51) Int. Cl.: C07F 17/00, C08F 10/00

(54) **Verfahren zur Herstellung von Silizium-verbrückten unsymmetrischen Cyclopentadienyl-, Indenyl- und Fluorenyl-Ligandsystemen**
Process for the preparation of silicon-bridged asymmetric cyclopentadienyl-, indenyl- and fluorenyl-containing ligand systems
Procédé de préparation de ligands asymmétriques à base de cyclopentadienyle, indényle et fluorényle ponté par un atome de silicium

(30) Priorität: 22.07.1994 AT 145394
(43) Veröffentlichungstag der Anmeldung: 24.01.1996
(73) Patentinhaber: Borealis Technology Oy, 06101 Porvoo (FI)
(72) Erfinder: Bildstein, Benno, Dr., A-6020 Innsbruck (AT); Denifl, Peter, Mag., A-6156 Gries am Brenner (AT); Fleischanderl, Robert, A-6130 Schwaz (AT); Ernst, Eberhard, Dr., A-4223 Katsdorf (AT); Neissl, Wolfgang, Dipl.-Ing. Dr., A-4040 Lichtenweg (AT)
(74) Vertreter: Marsden, John Christopher

(56) Entgegenhaltungen:
- EP-A- 0 528 287

## Beschreibung

Die Erfindung betrifft ein Verfahren zur gezielten Herstellung von Silizium-verbrückten unsymmetrischen Cyclopentadienyl-, Indenyl- und Fluorenyl-Ligandsystemen, die vor allem zur Herstellung von chiralen, stereorigiden Metallocenkomplexen verwendet werden. Diese Metallocene, beispielsweise die entsprechenden Zirkonderivate, eignen sich insbesondere als hochaktive, stereoselektive Katalysatoren für die Olefinpolymerisation. Entsprechende symmetrische Metallocenkatalysatoren sind beispielsweise in der DE-A- 44 17 542 beschrieben. Die wenigen in der Literatur beschriebenen Synthesen von unsymmetrischen (C₁-Symmetrie) Silizium-verbrückten (über Silylengruppen) Ligandsystemen sind mehrstufige Reaktionen, die "im Eintopf" ohne Isolierung bzw. Charakterisierung der Zwischenstufen durchgeführt werden und insbesondere die gewünschten Zielverbindungen nur in schlechter Ausbeute und/oder beschränkt auf wenige Substitutionsmuster zugänglich machen (D.Stern, M.Sabat, T.J. Marks, J.Am.Chem. Soc. 112 (1990) 9558; EP-A-528.287).

Es bestand daher die Aufgabe, ein Verfahren zur Herstellung der oben genannten unsymmetrischen Silylen-verbrückten Ligandsysteme zu finden, das die aus dem Stand der Technik bekannten Nachteile vermeidet.

Diese Aufgabe wird erfindungsgemäß dadurch gelöst, daß die Substitution von Dihalogensilanen durch verschiedene Cyclopentadienyl- (Indenyl-, Fluorenyl)-Gruppen schrittweise und selektiv unter Verwendung eines Alkoxyrestes als Schutzgruppe für die Monosubstitution durchgeführt wird (Schema 3).

Gegenstand der Erfindung ist demnach ein Verfahren zur Herstellung von Silizium-verbrückten unsymmetrischen Cyclopentadienyl-, Indenyl- und Fluorenyl-Ligandsystemen, dadurch gekennzeichnet, daß man
a) eine Verbindung der Formel VII 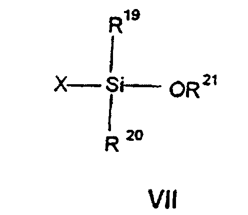 worin X ein Halogen,
   R¹⁹, R²⁰ gleich oder verschieden sind und (C₁ - C₂₀)Alkyl, (C₆ - C₁₄)Aryl, (C₇ - C₂₀)Arylalkyl, (C₇ - C₂₀)Alkylaryl, (C₁ - C₁₀)Fluoralkyl, (C₆ - C₁₀)Halogenaryl, (C₂ - C₁₀)Alkinyl,
   R²¹ (C₁ - C₁₀)Alkyl bedeuten,
   mit substituierten oder unsubstituierten Cyclopentadieniden, Indeniden oder Fluoreniden umsetzt,
b) anschließend die Alkoxygruppe gemäß a) der erhaltenen Verbindung durch ein Halogen substituiert und
c) anschließend die gemäß b) erhaltene Verbindung mit im Vergleich zu a) unterschiedlichen, substituierten oder unsubstituierten Cyclopentadieniden, Indeniden oder Fluoreniden umsetzt.

Als Halogen X in Formel VII werden Cl und Br bevorzugt, als Alkyl R²¹ Methyl und Ethyl.

Gemäß Erfindung ist es insbesondere möglich, die Cyclopentadienyl-, Indenyl-und Fluorenyl-Liganden selektiv, in guter Ausbeute und ohne Bildung der entsprechenden symmetrischen Ligandensysteme zu erhalten.

In Schema 1 sind in den Formeln I bis VI Beispiele für erfindungsgemäße Cyclopentadienyl-, Indenyl- und Fluorenyl-Ligandensysteme aufgezeigt, wobei
- R¹ bis R¹⁸: gleich oder verschieden sind und Wasserstoff, (C₁-C₂₀)Alkyl, (C₆-C₁₄)Aryl, (C₁-C₁₀)Alkoxy, (C₁-C₁₀)Alkenyl, (C₇-C₂₀)Arylalkyl, (C₇-C₂₀)Alkylaryl, (C₆-C₁₀)Aryloxy, (C₁-C₁₀)Fluoralkyl, (C₆-C₁₀)Halogenaryl, (C₂-C₁₀)Alkinyl, einen Rest SiR₃ oder einen heteroaromatischen Rest mit 5 oder 6 Ringgliedern, der ein oder mehrere Heteroatome enthalten kann, bedeutet,
- R^{1'} bis R^{18'} die für R¹ bis R¹⁸: genannten Bedeutungen besitzen, wobei insgesamt für die Verbindungen IV, V und VI ein Substitutionsmuster mit verschiedenen Cyclopentadien-(Inden-, Fluoren-)-yl-Resten resultiert,
- R¹⁹, R²⁰: gleich oder verschieden sind und (C₁-C₂₀)Alkyl, (C₆-C₁₄)Aryl, (C₇-C₂₀)Arylalkyl, (C₇-C₂₀)Alkylaryl, (C₁-C₁₀)Fluoralkyl, (C₆-C₁₀)Halogenaryl, (C₂-C₁₀)Alkinyl, bedeutet.

Schema 2 zeigt mögliche Isomere des Cyclopentadienyl- bzw. Indenylsystems.

Schema 3 zeigt beispielhaft die selektive Monosubstitution von Alkoxyhalogensilanen der Formel VII mit Cyclopentadieniden, Indeniden und Fluoreniden (Schritt a), wobei die Verbindungen VIII, IX und X entstehen.

Die laut Schema 3 dargelegte Monosubstitution erfolgt besonders günstig unter AlCl₃-Katalyse, in Analogie zur literaturbekannten nukleophilen Substitution von Trialkylchlorsilanen über hypervalente Zwischenstufen (R.J.P. Corriu, J. Organomet. Chem. 400 (1990) 81; C.Chuit, R.J. P. Corriu, C. Reye, J.C. Young, Chem. Rev. 93 (1993) 1371). Bevorzugt wird zur Aktivierung der Alkoxysilane VII AlCl₃ verwendet, jedoch führen andere Katalysatoren wie n-Bu₄NF, n-Bu₄-NCI, Dimethylaminopyridin, N-Methyl-Imidazol, usw. zu vergleichbaren Resultaten. Die Einführung der Schutzgruppe erfolgt nach einem literaturbekannten Verfahren (L.M.Shorr, J.Am.Chem. Soc. 76 (1954) 1390) gemäß folgendem Schema:

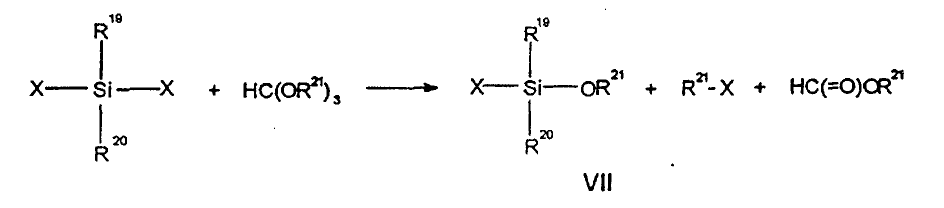

In einem weiteren Schritt (b) wird gemäß Schema 4 die Alkoxygruppe der Verbindungen VIII, IX und X durch ein Halogen substituiert, wobei die Verbindungen XI, XII und XIII entstehen. Die Abnahme der Alkoxy-Schutzgruppe wird nach literaturbekanntem Verfahren (C. Eaborn, J. Chem. Soc. 1949 (1949) 2755; M. Kumada, K.Tamao, Adv. Organomet. Chem. 6 (1968) 19; M. Ishikawa, M. Kumada, J. Chem. Soc., Chem. Commun. 1969 (1969) 567) beispielsweise mittels organischen Säurechloriden, vorzugsweise mittels Acetylchlorid, durchgeführt. Die Einführung des zweiten Cyclopentadienyl- (Indenyl-, Fluor-enyl-)-Liganden erfolgt in Schritt c) analog zur Erstsubstitution durch Reaktion der Halogensilane XI, XII, XIII mit Cyclopentadien-(Inden-, Fluoren-)-iden gemäß Schema 5, wobei im Vergleich zu Schritt a) unterschiedliche Cyclopentadienyl-, Indenyl- bzw. Fluorenyl-Liganden eingeführt werden.

Die für diese Substitutionsreaktionen benötigten Cyclopentadien-(Inden-, Fluoren-)-ide werden nach literaturbekannten Verfahren beispielsweise mittels Butyllithium in Tetrahydrofuran (L. Brandsma, Preparative Polar Organometallic Chemistry, Vol. 2, Springer Verlag, Berlin 1990) aus literaturbekannten Cyclopentadien-(Inden-, Fluoren-)-en oder im Fall substituierter Cyclopentadienide durch nukleophile Addition von Organolithiumverbindungen an Fulvene (K.J. Stone, R.D. Little, J.Org. Chem. 49 (1984) 1849; G. R. Knox, P.L.Pauson, J. Chem.Soc. 1961 (1961) 4610) hergestellt.

Die erfindungsgemäßen Cyclopentadienyl-, Indenyl- und Fluorenyl-Liganden eignen sich besonders als Liganden für Metallocenkomplexe, die als Katalysatoren bei der Olefinpolymerisation Verwendung finden. Insbesondere die entsprechenden Zirkon-Derivate sind hochaktive, stereoselektive Katalysatoren für die Olefinpolymerisation. Variation der Substitution des Ligandsystems erlaubt die gezielte Optimierung der Katalysatoreigenschaften beispielsweise bezüglich Polymerausbeute, Molmasse, Schmelzpunkt und Taktizität der Polymeren (J. Okuda, Nachr. Chem. Tech. Lab. 41 (1993) 8; R.L. Haltermann, Chem. Rev. 92 (1992) 965; EP-A-528.287).

Für die Verwendung der erfindungsgemäßen Cyclopentadienyl-, Indenyl- und Fluorenyl-Ligandsysteme für Metallocenkatalysatoren ist von besonderer Bedeutung, daß die Liganden nach einem Verfahren hergestellt werden, das ohne chromatographische Trennmethoden auskommt und damit die Produkte in einem technisch einfach durchführbaren Verfahren in größeren Mengen zugänglich macht. Weiters ist hervorzuheben, daß nach diesem Verfahren die substituierten Cyclopentadiene und Indene regioselektiv, d. h. ohne daß Konstitutionsisomere gebildet werden, hergestellt werden. Die Doppelbindungsisomere (analog Schema 2), die zum Teil - je nach Substitutionsmuster (vgl. die nachstehenden Beispiele) - anfallen, sind direkt für die Synthese von Metallocenen verwendbar, weil durch die Metallierung zu den entsprechenden Cyclopentadieniden bzw. Indeniden diese Isomerie wieder aufgehoben wird.

Die nachfolgenden Beispiele dienen zur näheren Erläuterung der Erfindung.

### Allgemeine Angaben:

Herstellung und Handhabung organometallischer Verbindungen erfolgten unter Ausschluß von Luft und Feuchtigkeit unter Ar-Schutzgasatmosphäre und unter Verwendung der in der metallorganischen Chemie üblichen Schlenk-Technik [D. F. Shriver, M. A. Drezdon The Manipulation of Air-Sensitive Compounds, 2nd Ed.; Wiley; New York, 1986]. Alle verwendeten Lösungsmittel wurden über geeigneten Trocknungsmitteln absolutiert. Das für die Abnahme der Alkoxy-Schutzgruppe verwendete Acetylchlorid wurde vor Gebrauch gereinigt [D. D. Perrin, W. L. F. Armarego, D. R. Perrin, Purification of Laboratory Chemicals, 2nd Ed., Pergamon Press, Oxford, 1980, p. 83]. Cyclopentadien wurde durch Cracken des Dimeren erhalten und bei -35° C gelagert.
Abkürzungen: THF = Tetrahydrofuran, Me = Methyl, Et = Ethyl, Ind = Indenyl, Flu= Fluorenyl; S= Singulett, T = Triplett, Q = Quartett, M = Multiplett.

### Beispiel 1: 1-Indenyl-9-fluorenyl-dimethylsilan (Formel III, R⁵ bis R¹⁸ = H, R¹⁹ und R²⁰ = Methyl)

### a) 9-Fluorenyl-Ethoxy-Dimethylsilan (Formel X, R¹¹ bis R¹⁸ = H, R¹⁹ und R²⁰ = Methyl)

In einem Schlenk-Rohr mit aufgesetztem Tropftrichter werden unter Argon 37.6 ml einer 1.6 molaren Methyllithium-Et₂O-Lösung (60.1 mmol) bei - 80° C zu einer Lösung von 10 g Fluoren (60.1 mmol) in 60 ml absolutem THF mit 100 mg AlCl₃ als Katalysator [R.J.P. Corriu, J. Organomet. Chem. **400** (1990) 81] während 10 min zugetropft. Unter starker Gasentwicklung läßt man auf Raumtemperatur unter Rühren kommen, tropft diese Lösung zu einer auf -60° C gekühlten Lösung von 9.16 g Dimethylchlor-ethoxysilan (66 mmol, frisch destilliert, Siedepunkt 92° - 95° C/Normaldruck [L. M. Shorr, J. Am. Chem. Soc **76** (1954) 1390]) in 50 ml absolutem THF während einer Stunde zu und rührt die Reaktionsmischung 1.5 h bei - 50° C und 22 h bei Raumtemperatur. Nach Abziehen des Lösungsmittels erhält man ein rotes Öl als Produkt, bestehend aus 9-Fluorenyl-ethoxy-dimethylsilan und Fluoren als Nebenprodukt. Flash-Chromatopraphie (Kieselgel 60, Fluka; CH₂Cl₂/Petrolether 2/3) liefert 11.3 g, 42.1 mmol 9-Fluorenyl-ethoxy-dimethylsilan (70.2 % Ausbeute, bezogen auf Fluoren), das als gelbliches Öl (Siedepunkt: 85°/10⁻² Torr) anfällt.
C₁₇H₂₀OSi (268.43 g/Mol)
MS (70 eV) [m/z(%)]: M⁺ : 268 (16), M⁺ - OEt: 223 (2), M⁺ - OEt, -2 Me: 193 (4), Flu: 165 (46), M⁺ - Flu: 103 (100), Si(CH3)20: 74 (43).
CH-Analyse [% gefunden (% berechnet)]: C 76.54 (76.07), H 7.61 (7.51).
IR [cm⁻¹] KBr: 3080w, 2973w, 1678m, 1605w, 1449w, 1391w, 1252m, 1107s, 1097s,1049s, 951w, 879w, 831m, 810m.
¹H-NMR [ppm] CDCl₃: - 0.04 (S, 6 H, -SiCH₃), 1.22 (T, 3 H, -OCH₂CH₃), 3.66 (Q, 2 H, -OCH₂CH₃), 3.95 (S, 1 H, Flu H9), 7.32 - 7.86 (M, 8 H, Flu).
¹³C{1H}-NMR [ppm] CDCl₃: -4.03 (-SiCH₃), 18.19 (-OCH₂CH₃), 42.52 (-OCH₂CH₃), 58.51 (Flu C9), 119.58 - 144.12 (Flu).

### b) 1-Indenyl-9-fluorenyl-dimethylsilan (Formel III, R⁵ bis R¹⁸ = H, R¹⁹ und R²⁰ = Methyl)

Zu 5 ml Acetylchlorid (70.0 mmol) werden bei 0° C unter Argon 2.9 g 9-Fluorenyl-ethoxy-dimethylsilan (10.8 mmol) langsam zugetropft. Nach Rühren über Nacht bei Raumtemperatur werden die flüchtigen Reaktionsprodukte bzw. überschüssiges Acetylchlorid im Ölpumpenvakuum abgezogen. Als Rohprodukt erhält man 2.6 g, 9.72 mmol 9-Fluorenyl-dimethylchlorsilan (ca. 90 %) als gelbliches, hydrolyseempfindliches Pulver, das ohne weitere Reinigung mit einer aus Butyllithium und Inden frisch hergestellten Indenyllithium-Lösung (10.8 mmol in THF) umgesetzt wird: Zu 2.6 g, 9.72 mmol 9-Fluorenyl-dimethylchlor-silan, gelöst in 20 ml absolutem THF, wird unter Kühlung (- 50° C) diese Indenyl-lithium-Lösung während 30 min zugetropft. Nach einer weiteren halben Stunde Rühren bei - 50° C ist die Reaktion laut Dünnschichtchromatogramm beendet. Die dunkelbraune Reaktionsmischung wird auf ca. 50 ml Wasser gegossen, die organische Phase abgetrennt, die wässrige Phase dreimal mit Et₂O extrahiert, die vereinigten organischen Phasen werden mit Wasser gewaschen, und das Produkt wird nach Trocknen mit wasserfreiem Na₂SO₄ durch Abziehen der organischen Lösungsmittel am Rotavapor als braunes Öl erhalten. Aus diesem Öl erhält man durch Rühren mit Petrolether einen gelben Niederschlag. Nach Umkristallisation aus Petrolether erhält man 2.6 g, 7.78 mmol, 1-Indenyl-9-fluorenyl-dimethylsilan (72 % Ausbeute bezogen auf 9-Fluorenyl-ethoxy-dimethylsilan, 50.4 % Ausbeute bezogen auf Fluoren) in Form weißer Kristalle mit Schmelzpunkt 115° - 116° C.
C₂₄H₂₂Si (338.52 g/Mol)
MS (70 eV) [m/z(%)]: M⁺: 338 (27), M⁺ - Ind: 223 (93), M⁺ - Ind, - 2 Me: 192 (40), M⁺ - Flu: 173 (100), Flu: 165 (86), Ind: 115 (13).
CH-Analyse [% gefunden (% berechnet)]: C 85.22 (85.15), H 6.78 (6.55).
IR [cm⁻¹] KBr: 3054w, 1912w, 1578w, 1474w, 1449m, 1439m, 1360w, 1335w, 1302w, 1248s, 1219m, 1186m, 1113w, 1097w, 1074m, 1051s, 1030m, 980m, 872m, 831s, 794s,
766s, 735s, 719m, 642w, 621w, 603w, 507m, 493m, 453m.
¹H-NMR [ppm] CDCl₃: - 0.33 (S, 3 H, -SiCH₃), - 0.13 (S, 3 H, -SiCH₃), 3.76 (S, 1 H, Ind H1), 4.23 (S, 1 H, Flu H9), 6.49 - 8.04 (M, 14 H, Ind/Flu).
¹³C{1H}-NMR [ppm] CDCl₃: - 6.93 (-SiCH₃), - 6.11 (-SiCH₃), 41.95 (Ind C1), 43.68 (Flu C9), 120.09 - 144.89 (Ind/Flu). [nach NMR isomerenfrei]

### Beispiel 2: Cyclopentadienyl-9-fluorenyl-dimethylsilan (Formel II, R¹ bis R¹⁸ = H, R¹⁹ und R²⁰ = Methyl)

### a) 9-Fluorenyl-ethoxy-dimethylsilan (Formel X, R¹¹ bis R¹⁸ = H, R¹⁹ und R²⁰ = Methyl)

Zu einer Lösung von 3.0 g Fluoren (18.0 mmol) in 30 ml THF wurden 13.2 ml Butyllithium (1.5 M, 1.1 Moläquivalente, 19.8 mmol) bei - 80° C zugetropft und die tieforange Lösung 30 min bei Raumtemperatur gerührt. Diese Lösung wurde in einen Tropftrichter überführt und bei - 60° C während 30 min zu einer Lösung von 5.3 ml Chlordimethyl-ethoxysilan (36 mmol, 2 Moläquivalente) und 100 mg AlCl₃ in 30 ml THF zugetropft. Die farblose Lösung wurde bei Raumtemperatur weitere 45 h gerührt und anschließend mit NaHCO₃/H₂O hydrolysiert. Die organische Phase wurde abgetrennt, mit NaHCO₃/ H₂O gewaschen, die wäßrigen Phasen dreimal mit Et₂O gewaschen und die vereinigten organischen Phasen dreimal mit H₂O gewaschen. Nach Trocknung über MgSO₄ wurden die Lösungsmittel am Rotavapor abgezogen und das verbliebene gelbe Öl 14 h am Hochvakuum getrocknet und durch Flashchromatographie (Silicagel 60, CH₂Cl₂/n-Hexan 1/2) gereinigt: 4.43 g gelbes, öliges 9-Fluorenyl-dimethyl-ethoxysilan (91 % Ausbeute) mit identischen analytischen Daten wie in Beispiel 1.

### b) Cyclopentadienyl-9-fluorenyl-dimethylsilan (Formel II, R¹ bis R¹⁸ = H, R¹⁹ und R²⁰ = Methyl)

0.94 g 9-Fluorenyl-dimethyl-ethoxysilan (3.5 mmol) werden mit 2 ml Acetylchlorid (28.1 mmol, 8 Moläquivalente) versetzt und bei Raumtemperatur über Nacht gerührt. Überschüssiges Acetylchlorid und Essigsäureethylester werden am Hochvakuum abgezogen und der feste weiße Rückstand 5 h am Hochvakuum getrocknet. Das resultierende Chlorsilan wird in 40 ml THF gelöst und bei -60° C mit einer Lithium-Cyclopentadienid-Lösung (3.5 mmol) versetzt und 6 h bei -40° C gerührt. Die dunkelgelbe Reaktionslösung wird mit Wasser hydrolysiert, die Phasen werden getrennt, die wäßrige Phase dreimal mit Ether gewaschen, die vereinigten organischen Phasen dreimal mit Wasser gewaschen, und die organische Phase über MgSO₄ getrocknet. Nach Abziehen der Lösungsmittel verbleibt ein gelbes Öl als Produkt, das am Hochvakuum 1 h getrocknet wird: 0.52 g Cyclopentadienyl-9-fluorenyl-dimethylsilan (52% bezogen auf Ethoxy-silan). Für die Analyse wurde ein Teil mittels Flashchromatographie (Silicagel 60, CH₂Cl₂/n-Hexan 1/2) gereinigt.
C₂₀H₂₀Si (288.47 g/Mol)
MS (70 eV) [m/z(%)]: M⁺ 288(13), M⁺- H: 287(45), M⁺ - Me - H: 272(5), M⁺ - Cp: 223(21), Flu: 166(59), M⁺ - Flu + H: 124(100).
IR [cm⁻¹] KBr: 3066w, 2963w, 2904w, 1609w, 1476w, 1449m, 1402w, 1259m, 1249sh, 1182w, 1095m, 1049s, 1028m, 976w, 953m, 876m, 829s, 798ss, 736ss, 696m, 621w, 490m, 432w.
¹H-NMR [ppm] CDCl₃: - 0.11 bis + 0.35 (M, 6 H, SiMe), 2.92 - 2.93 (M, 1 H, Cp), 4.06 -4.14 (M, H, Flu H9), 6.71 - 8.40 (M, 8 H, Flu/Cp).
¹³C{1H}-NMR [ppm] CDCl₃: - 5.66 bis + 1.13 (SiMe), 37.0 - 45.76 (Flu C9; Cp C1, C2 oder C3), 114.87 - 145.20 (Flu/Cp). [nach NMR 3 Isomere]

### Beispiel 3: 9-Fluorenyl-(3-t-butylcyclopentadienyl)-dimethylsilan (Formel II, R¹ = H, R² = t-Butyl, R³ bis R¹⁸ = H, R¹⁹ und R²⁰ = Methyl)

### a) 9-Fluorenyl-ethoxy-dimethylsilan (Formel X, R¹¹ bis R¹⁸ = H, R¹⁹ und R²⁰ = Methyl)

Es wurde analog Beispiel 2 verfahren.

### b) 9-Fluorenyl-(3-t-butylcyclopentadienyl)-dimethylsilan (Formel II, R¹ = H, R² = t-Butyl, R³ bis R¹⁸ = H, R¹⁹ und R²⁰ = Methyl)

0.84 g 9-Fluorenyl-dimethyl-ethoxysilan (3.3 mmol) wurden analog Beispiel 2 in 9-Fluorenyl-dimethyl-chlorsilan überführt. Das Chlorsilan wird in 20 ml THF gelöst und bei -60° C mit einer 3.3-millimolaren THF-t-Butylcyclopentadienyl-Lithium-Lösung versetzt und 4 h bei -30° C gerührt. Nach analoger Aufarbeitung wie in Beispiel 2 erhält man 0.73 g gelbes, öliges 9-Fluorenyl-(3-t-butylcyclopentadienyl)-dimethylsilan (65%, bezogen auf Ethoxysilan). Für die Analyse wurde ein Teil mittels Flashchromatographie (Silicagel 60, CH₂Cl₂/n-Hexan 1/2) gereinigt.
C₂₄H₂₈Si (344.57 g/Mol)
MS (70 eV) [m/z(%)]: M⁺: 344(8), M⁺ - H: 343(21), M⁺ - tBuCp + H: 223(9), Flu: 166(13), M⁺ - Flu: 179(100).
IR [cm⁻¹] KBr: 3060w, 2959m, 2902w, 2869w, 1717m, 1613m, 1604w, 1476w, 1449m, 1364w, 1302w, 1254m, 1182w, 1099sh, 1051m, 962w, 850m, 829m, 816m, 734s, 657m, 492m.
¹H-NMR [ppm] CDCl₃: - 0.04 bis + 0.27 (M, 6 H, SiMe), 1.23 - 1.40 (M, 9 H, t-Bu), 2.82-3.24 (3 M, 3-mal 1 H, Cp), 4.11 - 4.14 (3 M, 3-mal 1 H, Flu H9), 5.79 - 8.09 (M, 11 H, Flu/Cp).
¹³C{1H}-NMR [ppm] CDCl₃: - 6.16 bis - 3.85 (SiMe), 29.78 - 32.12 (t-Bu), 42.66 - 47.04 (Flu C9, Cp C1), 119.69 - 145.22 (Flu/Cp). [nach NMR 3 Isomere]

### Beispiel 4: 9-Fluorenyl-3-ethylindenyl-dimethylsilan (Formel III, R⁵ = H, R⁶ = Ethyl, R⁷ bis R¹⁸ = H, R¹⁹ und R²⁰ = Methyl)

### a) 9-Fluorenyl-ethoxy-dimethylsilan (Formel X, R¹¹ bis R¹⁸ = H, R¹⁹ und R²⁰ = Methyl)

Es wurde analog Beispiel 2 verfahren.

### b) 9-Fluorenyl-3-ethylindenyl-dimethylsilan (Formel III, R⁵ = H, R⁶ = Ethyl, R⁷ bis R¹⁸ = H, R¹⁹ und R²⁰ = Methyl)

0.85 g 9-Fluorenyl-ethoxy-dimethylsilan (2.16 mmol) wurden in analoger Weise wie in Beispiel 2 in 9-Fluorenyl-dimethyl-chlorsilan überführt. Das Chlorsilan wird in 20 ml THF gelöst, und bei -60° C wird eine THF-1-Ethylindenyl-Lithium-Lösung (2.2 mmol in 10 ml THF) während 30 min zugetropft.Nach Rühren über 2 h bei -50° C wird wie in Beispiel 2 aufgearbeitet: 0.51 g gelbes, öliges 9-Fluorenyl-3-ethylindenyl-dimethylsilan (64%, bezogen auf Ethoxysilan). Für die Analyse wurde ein Teil mittels Flashchromatographie (Silicagel 60, CH₂Cl₂/n-Hexan 1/2) gereinigt.
C₂₆H₂₆Si (366.57 g/Mol)
MS (70 eV) [m/z(%)]: M⁺: 366(19), M⁺ - H: 365(58), M⁺ - Et: 337(3), M⁺ - Et - Ind: 223(64), M⁺ - Flu: 201(100), Flu: 165(39), Ind + Et + H:145(20).
IR [cm⁻¹] KBr: 3062w, 2963w, 1609w, 1476w, 1449m, 1248m, 1180w, 1099w, 1047m, 1026m, 987w, 935w, 876m, 827s, 800s, 767s, 734ss, 621m, 497m, 430w.
¹H-NMR [ppm] CDCl₃: - 0.01 (S, 3 H, SiMe), 0.23 (S, 3 H, SiMe), 1.64 (T, 3 H, Me von Et), 3.00 (Q, 2 H, CH₂ von Et), 3.94 (S, 1 H, Ind H1), 4.53 (S, 1 H, Flu H9), 6.44 - 8.37 (M, 13 H, Flu/Ind).
¹³C{1H}-NMR [ppm] CDCl₃: - 6.86 und -5.74 (SiMe), 12.84 (Me von Et), 20.69 (CH2 von Et), 41.67 (Flu C9), 42.08 (Ind C1), 119.08 - 145.46 (Flu/Ind). [nach NMR isomerenfrei]

### Beispiel 5: 2-Methylindenyl-dimethyl-cyclopentadienyl-silan (Formel I, R¹ bis R⁴ = H, R⁵ = Methyl, R⁶ bis R¹⁰ = H, R¹⁹ und R²⁰ = Methyl)

### a) 2-Methylindenyl-ethoxy-dimethylsilan (Formel IX, R⁵ = Methyl, R⁶ bis R¹⁰ = H, R¹⁹ und R²⁰ = Methyl, R²¹ = Ethyl)

Zu einer Lösung von 560 mg 2-Methylinden (4.3 mmol) in 20 ml THF wurden 3.15 ml einer 1.5 molaren Butyllithium-Lösung in Hexan (4.73 mmol) bei -80° C zugetropft und anschließend 30 min bei Raumtemperatur gerührt. Die pinkfarbene 2-Methylindenyl-Lithium-Lösung wird in einen Tropftrichter überführt und bei -80° C während 30 min zu einer Lösung von 2.47 ml Chlordimethylethoxysilan (8.6 mmol, 2.3 g, 2 Moläquivalente) und 100 mg AlCl₃ in 20 ml THF zugetropft. Nach 18 h Rühren bei -40° C wird mit NaHCO₃-Lösung hydrolysiert, die organische Phase abgetrennt, mit NaHCO₃-Lösung gewaschen, die wäßrigen Phasen dreimal mit Et₂O gewaschen, die vereinigten organischen Phasen mit Wasser gewaschen und über MgSO₄ getrocknet. Nach Abziehen der Lösungsmittel und Trocknen am Hochvakuum wird das gelbe Öl mittels Flashchromatographie (Silicagel 60, CH₂Cl₂/n-Hexan 1/2) gereinigt: 0.85 g 2-Methylindenyl-ethoxy-dimethylsilan als gelbes Öl (85% Ausbeute).
C₁₄H₂₀SiO (232.40 g/Mol)
MS (70 eV) [m/z(%)]: M⁺: 232(40), M⁺ - Me: 217(8), M⁺ - OEt + H: 188(7), Ind: 130(41).
IR [cm⁻¹] KBr: 3064w, 2963m, 2909w, 1713w, 1603w, 1458m, 1259s, 1047s, 1011sh, 856sh, 826ss, 794ss, 752m, 704w, 640w, 569w, 488w, 474m, 453m.
¹H-NMR [ppm] CDCl₃: - 0.02 (S, 3 H, -SiMe), 0.29 (S, 3 H, -SiMe), 1.41 (T, 3 H, -OEt), 2.42 (S, 3 H, Me-Ind), 3.66 (S, 1 H, Ind H1), 3.91 (Q, 2 H, -OEt), 6.73 - 7.58 (M, 5 H, Ind).
¹³C{1H}-NMR [ppm] CDCl₃: - 4.84 (-SiMe), - 3.29 (-SiMe), 16.96 (Me-Ind), 18.04 (-OEt), 48.99 (Ind C1), 58.36 (-OEt), 119.30 - 146.7 (Ind).

### b) 2-Methylindenyl-dimethyl-cyclopentadienyl-silan (Formel I, R¹ bis R⁴ = H, R⁵ = Methyl, R⁶ bis R¹⁰ = H, R¹⁹ und R²⁰ = Methyl)

0.32 g 2-Methylindenyl-ethoxy-dimethylsilan (1.37 mmol) werden mit 0.75 ml Acetylchlorid bei Raumtemperatur über Nacht gerührt. Überschüssiges Acetylchlorid und Essigsäureethylester werden am Hochvakuum abgezogen und das farblose, viskose Öl wird 24 h am Hochvakuum getrocknet. Das 2-Methylindenyl-dimethyl-chlor-silan **XII** wird in 20 ml THF gelöst und bei -60° C, während 30 min, eine Cyclopentadienyl-Lithium-Lösung (1.37 mmol in 25 ml THF) zugetropft und 2 h bei -50° C gerührt. Die Aufarbeitung erfolgt gleich wie bei den obenstehenden Beispielen: 0.28 g gelbes, öliges 2-Methylindenyl-dimethyl-cyclopentadienyl-silan (81%, bezogen auf Ethoxy-silan). Für die Analyse wurde ein Teil mittels Flashchromatographie (Silicagel 60, CH₂Cl₂/n-Hexan 1/2) gereinigt.
C₁₇H₂₀Si (252.43 g/Mol)
MS (70 eV) [m/z(%)]: M⁺: 252(10), M⁺ - H: 251(38), M⁺ - Me: 237(1), M⁺ - Cp + H: 187(7), M⁺ - Me-Ind: 124(100), IndH: 116(7).
IR [cm⁻¹] KBr: 3066w, 3011w, 2961w, 2911w, 1603w, 1458m, 1441sh, 1378w, 1343w, 1299w, 1289w, 1250m, 1221w, 1191w, 1049m, 1011m, 974m, 948m, 827s, 813s, 792s, 752s, 729m, 694m, 640m, 605w, 567m, 486s, 476s, 458s, 411w.
¹H-NMR [ppm] CDCl₃: - 0.37 bis + 0.04 (M, 6 H, SiMe), 1.93 - 2.11 (M, 3 H, Me von Me-Ind), 3.13 - 3.31 (M, 2 H, Cp H1 und Ind H1), 6.08 - 6.52 (M, Cp), 6.63 - 7.30 (M, Ind).
¹³C{1H}-NMR [ppm] CDCl₃: - 5.42 bis + 1.0 (SiMe), 16.70 - 17.76 (Me von Me-Ind), 42.63 - 44.48 (Ind C1; Cp C1, C2, C3), 114.54 - 147.17 (Ind/Cp). [nach NMR 3-Isomere]

### Beispiel 6: 2-Methylindenyl-3-t-butylcyclopentadienyl-dimethylsilan (Formel I, R¹ = H, R² = t-Butyl, R³ und R⁴ = H, R⁵ = Methyl, R⁶ bis R¹⁰ = H, R¹⁹ und R²⁰ = Methyl)

### a) 2-Methylindenyl-ethoxy-dimethylsilan (Formel IX, R⁵ = Methyl, R⁶ bis R¹⁰ = H, R¹⁹ und R²⁰ = Methyl, R²¹ = Ethyl)

Es wurde analog Beispiel 5 verfahren.

### b) 2-Methylindenyl-3-t-butylcyclopentadienyl-dimethylsilan (Formel I, R¹ = H, R² = t-Butyl, R³ und R⁴ = H, R⁵ = Methyl, R⁶ bis R¹⁰ = H, R¹⁹ und R²⁰ = Methyl)

0.21 g 2-Methylindenyl-ethoxy-dimethylsilan (0.9 mmol) wurden mit 0.5 ml Acetylchlorid (7 mMol, 7.8 Moläquivalente) bei Raumtemperatur über Nacht gerührt. Überschüssiges Acetylchlorid und Essigsäureethylester werden am Hochvakuum abgezogen und das farblose, viskose Öl wird 24 h am Hochvakuum getrocknet. Das 2-Methylindenyl-dimethyl-chlor-silan **XII** wird in 20 ml THF gelöst und bei -60° C, während 30 min, eine t-Butylcyclopentadienyl-Lithium-Lösung (3.65 mmol, 4 Moläquivalente, in 15 ml THF) zugetropft und 2 h bei -50° C gerührt. Die Aufarbeitung erfolgt gleich wie bei den obenstehenden Beispielen: 0.17 g gelbes, öliges 2-Methylindenyl-3-t-butylcyclopentadienyl-dimethylsilan (62 %, bezogen auf Ethoxysilan). Für die Analyse wurde ein Teil mittels Flashchromatographie (Silicagel 60, CH₂Cl₂/n-Hexan 1/2) gereinigt.
C₂₁H₂₈Si (308.54 g/Mol)
MS (70 eV) [m/z(%)]: M⁺: 308(6), M⁺ - H: 307(18), M⁺ - Me - H: 292(3), M⁺ - Me-Ind: 179(100).
IR [cm⁻¹] KBr: 3064w, 2961w, 2897w, 1609w, 1476w, 1449m, 1440w, 1344w, 1334w, 1250m, 1182w, 1099w, 1049m, 974m, 953m, 876m, 827s, 798s, 735ss, 694s, 621m, 559w, 492s, 432m.
¹H-NMR [ppm] CDCl₃: - 0.25 bis 0.11 (M, 6 H, SiMe), 0.98 - 1.17 (M, 9 H, t-Bu), 1.19 - 2.06 (M, 3 H, Me von Me-Ind), 2.61 - 3.65 (M, 1 H, Ind H1; 1 H, Cp H1; 2 H, Cp), 5.89 - 7.5 (M, 8 H, Ind/Cp).
¹³C{1H}-NMR [ppm] CDCl₃: - 5.94 bis + 1.29 (SiMe), 17.78 (Me von Me-Ind), 29.13 - 31.32 (t-Bu), 43.88 - 49.54 (Ind C1; Cp C1, C2, C3), 119.49 - 144.94 (Ind). [nach NMR mindestens 3 Isomere]

### Beispiel 7: 2-Methylindenyl-3-ethylindenyl-dimethylsilan (Formel V, R⁵ = Methyl, R⁶ bis R¹⁰ = H, R^{5'} = H, R^{6'} = Ethyl, R^{7'} bis R^{10'} = H, R¹⁹ und R²⁰ = Methyl)

### a) 2-Methylindenyl-ethoxy-dimethylsilan (Formel IX, R⁵ = Methyl, R⁶ bis R¹⁰ = H, R¹⁹ und R²⁰ = Methyl, R²¹ = Ethyl)

Es wurde analog Beispiel 5 verfahren.

### b) 2-Methylindenyl-3-ethylindenyl-dimethylsilan (Formel V, R⁵ = Methyl, R⁶ bis R¹⁰ = H, R^{5'} = H, R^{6'} = Ethyl, R^{7'} bis R^{10'} = H, R¹⁹ und R²⁰ = Methyl)

0.32 g 2-Methylindenyl-ethoxy-dimethylsilan (1.37 mmol) wurden mit 0.75 ml Acetylchlorid (10.5 mmol, 7.8 Moläquivalente) bei Raumtemperatur über Nacht gerührt. Überschüssiges Acetylchlorid und Essigsäureethylester werden am Hochvakuum abgezogen und das farblose, viskose Öl wird 24 h am Hochvakuum getrocknet. Das 2-Methylindenyl-dimethyl-chlor-silan **XII** wird in 20 ml THF gelöst und bei -60° C, während 30 min, eine 1-Ethylindenyl-Lithium-Lösung (1.37 mmol, 1 Moläquivalent, in 15 ml THF) zugetropft und 2 h bei -50° C gerührt. Die Aufarbeitung erfolgt gleich wie bei den oben-stehenden Beispielen: 0.27 g gelbes, öliges 2-Methylindenyl-3-ethylindenyl-dimethyl-silan (59 %, bezogen auf Ethoxysilan). Für die Analyse wurde ein Teil mittels Flash-chromatographie (Silicagel 60, CH₂Cl₂/n-Hexan 1/2) gereinigt.
C₂₃H₂₆Si (330.54 g/Mol)
MS (70 eV) [m/z(%)]: M⁺ - H: 329(62), M⁺ - Me: 314(3), M⁺ - Me - Et: 285(3), M⁺ - Me-Ind: 201(100), M⁺ - Et-Ind - 2 H: 188(99), Me-Ind: 129(36).
IR [cm⁻¹] KBr: 3064w, 3013w, 2965w, 2934w, 1601w, 1456m, 1377w, 1250m, 1221w, 1098sh, 1046m, 1010m, 985w, 876m, 815s, 796m, 766m, 752m, 704w, 632m, 563w, 497m, 474w, 449w.
¹H-NMR [ppm] CDCl₃: - 0.02 bis + 0.20 (M, 6 H, SiMe), 1.59 - 1.78 (M, 3 H, Me von Et), 2.48 - 2.72 (M, 3 H, Me von Me-Ind), 2. 94 - 3.13 (M, 2 H, CH2 von Et), 3. 69 - 4.00 (M, 2 H, Ind H1, Ind' H1), 6.40 - 7.92 (M, 10 H, Ind/Ind').
¹³C{1H}-NMR [ppm] CDCl₃: - 6.66 bis 1.13 (SiMe), 12.71 und 12. 73 (Me von Et), 20.67 (CH2 von Et), 17. 87 (Me von Me-Ind), 41.97 (Et-Ind C1), 48.57 und 48.01 (Me-Ind C1), 118.94 - 147.2 (Ind/Ind'). [nach NMR mindestens 2 Isomere]

### Beispiel 8: (3-(t-Butyl)-cyclopentadienyl)-cyclopentadienyl-dimethylsilan (Formel IV, R¹, R³ und R⁴ = H, R² = t-Butyl, R^{1'} bis R^{4'} = H, R¹⁹ und R²⁰ = Methyl)

### a) 3-(t-Butyl)-cyclopentadienyl-dimethyl-ethoxysilan (Formel VIII, R¹, R³ und R⁴ = H, R² = t-Butyl, R¹⁹ und R²⁰ = Methyl, R²¹ = Ethyl)

Zu einer Lösung von 2.12 ml Dimethylchlorethoxysilan (3 mmol) und 100 mg Aluminiumtrichlorid, wasserfrei, in 30 ml THF wird bei -60° C während 45 min eine Lösung von 0.915 g Lithium-(t-butylcyclopentadienyl) (7.14 mmol) in 50 ml THF zugetropft. Die Lösung wird eine Stunde bei -60° C und 18 Stunden bei Raumtemperatur gerührt und anschließend mit KHCO₃-Lösung hydrolysiert, die organische Phase abgetrennt, mit KHCO₃-Lösung gewaschen, die wässrige Phase dreimal mit Et₂O gewaschen, die vereinigten organischen Phasen dreimal mit H₂O gewaschen und über MgSO₄ getrocknet. Nach Abziehen des Lösungsmittels und Trocknen des Rohprodukts - ein gelbes, viskoses Öl - wird mittels Flashchromatographie (vgl. Beispiel 5) gereinigt: 1.08 g 3-(t-Butyl)-cyclopentadienyl-dimethyl-ethoxysilan als hellgelbes Öl (67.4% Ausbeute).
C₁₃H₂₄SiO (224.42 g/Mol)
MS (70 eV) [m/z(%)]: M⁺ - H: 223.5 (30), M⁺ -(t-Bu-Cp): 103.5 (28), M⁺ - (t-Bu-Cp) - H: 102.5(100).
IR [cm⁻¹] KBr: 2961m, 2903m, 2869m, 1580w, 1512w, 1462w, 1391w, 1362m, 1287w, 1252m, 1200w, 1165w, 1130m, 1109m, 1082m, 984m, 964m, 949m, 904w, 856m, 833m, 810s, 781s, 715m, 656vs, 629vs, 580w, 451m, 424m.
¹H-NMR [ppm] CDCl₃: - 0.03 bis 0.29 (M, 6 H, SiMe), 1.13 - 1.33 (M, 12 H, t- Bu und Methyl von Ethoxy), 3.06 - 3.46 (M, 1 H, Cp H1), 3.74 (Q, 2 H, Methylen von Ethoxy), 6.11 - 6.68 (M, 3 H, Cp).
¹³C{1H}-NMR [ppm] CDCl₃: - 1.54 bis - 3.55 (SiMe), 18.45 (Me von OEt), 29.84 - 32.12 (t-Bu), 51.25 (Cp C1), 58.70 (CH2 von OEt), 122.38 (Cp), 131.09 (Cp), 132.56 (Cp). [nach NMR 2 Isomere]

### b) (3-(t-Butyl)-cyclopentadienyl)-cyclopentadienyl-dimethylsilan (Formel IV, R¹, R³ und R⁴ = H, R² = t-Butyl, R^{1'} bis R^{4'} = H, R¹⁹ und R²⁰ = Methyl)

0.32 g 3-(t-Butyl)-cyclopentadienyl-dimethyl-ethoxysilan (1.43 mmol) werden mit 1 ml Acetylchlorid (12 mmol) 16 Stunden bei Raumtemperatur gerührt und anschließend überschüssiges Acetylchlorid und entstandenes Ethylacetat am Hochvakuum abgezogen. Das Chlorsilan, ein dunkelbraunes Öl, wird in 30 ml THF gelöst und bei -50° C eine Lösung von Cyclopentadienyllithium (1.57 mmol) in 20 ml THF zugetropft. Nach 150 min Rühren bei -50° C wird wie in obenstehenden Beispielen aufgearbeitet: 0.16 g gelbes, öliges (3-(t-Butyl)-cyclopentadienyl)-cyclopentadienyl-dimethylsilan (45% bezogen auf Ethoxysilan).
C₁₆H₂₄Si (244.45 g/Mol)
MS (70 eV) [m/z(%)]: M⁺: 244(31), M⁺ -Me: 229(29), M⁺ - (t-Bu): 187.5(11), M⁺ - Cp: 180.5(18), M⁺ - Cp - Me: 165(39), M⁺ - (t-Bu-Cp): 123(98), M⁺ - (t-Bu-Cp) - Me: 107(28).
IR [cm⁻¹] KBr: 3060w, 2971m, 2925m, 1717w, 1613w, 1476m, 1449m, 1441m, 1391w, 1300w, 1252s, 1182w, 1165w, 1105s, 1078s, 1055s, 949m, 881m, 831s, 802s, 762m, 734vs, 640w, 621m, 488m, 428m.
¹H-NMR [ppm] CDCl₃: - 0.08 bis 0.21 (M, 6 H, SiMe), 1.07 - 1.57 (M, 9 H, t-Bu), 3.23 - 3.58 (M, 2 H, Cp H1, Cp' H1), 6.29 - 6.90 (M, 7 H, Cp, Cp').
¹³C{1H}-NMR [ppm] CDCl₃: - 1.14 bis 1.01 (SiMe), 29.87 - 32.16 (t-Bu), 52.44 (Cp, Cp' C1), 122.71 (Cp), 131.07 (Cp), 132.83 (Cp). [nach NMR mindestens drei Isomere] 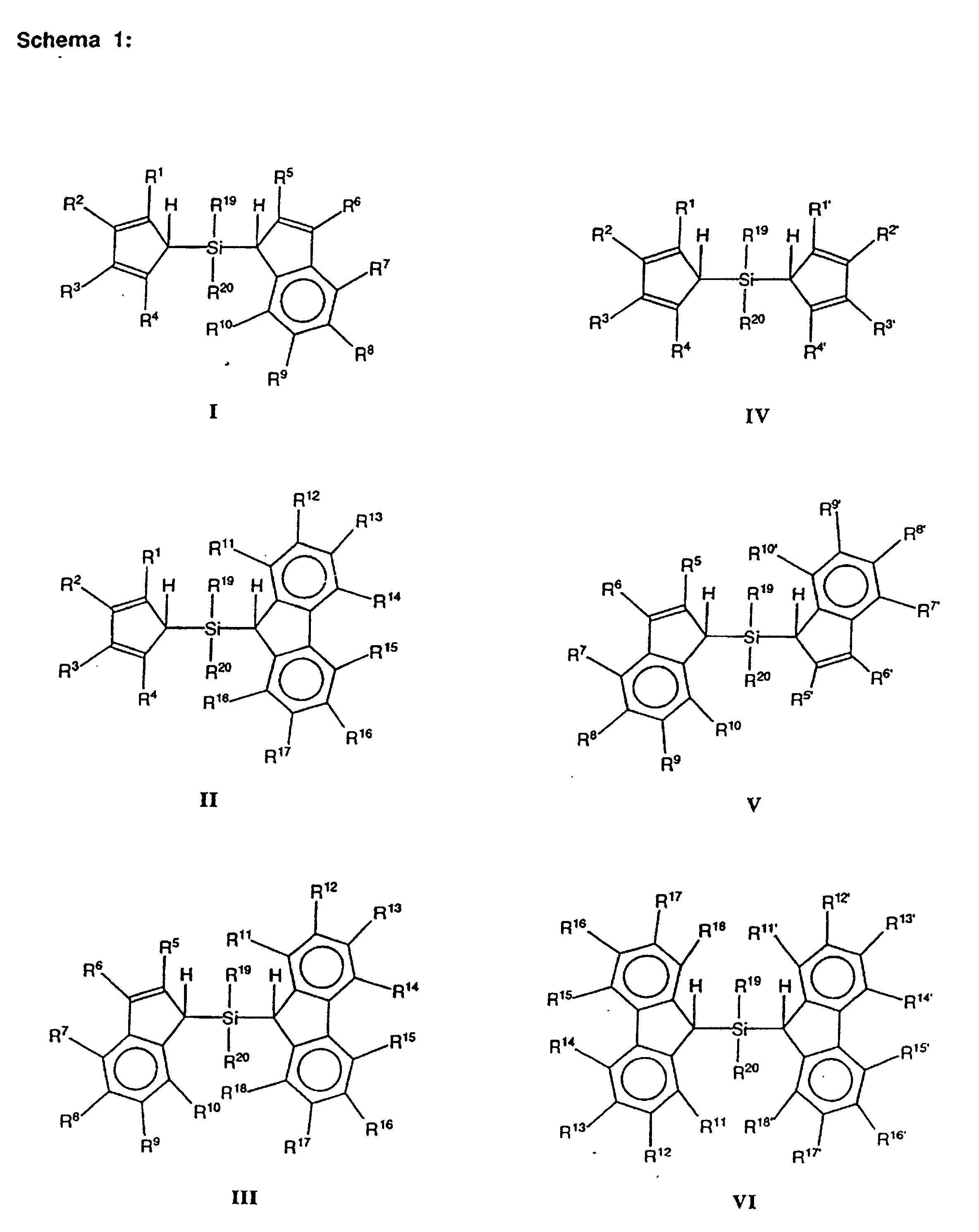 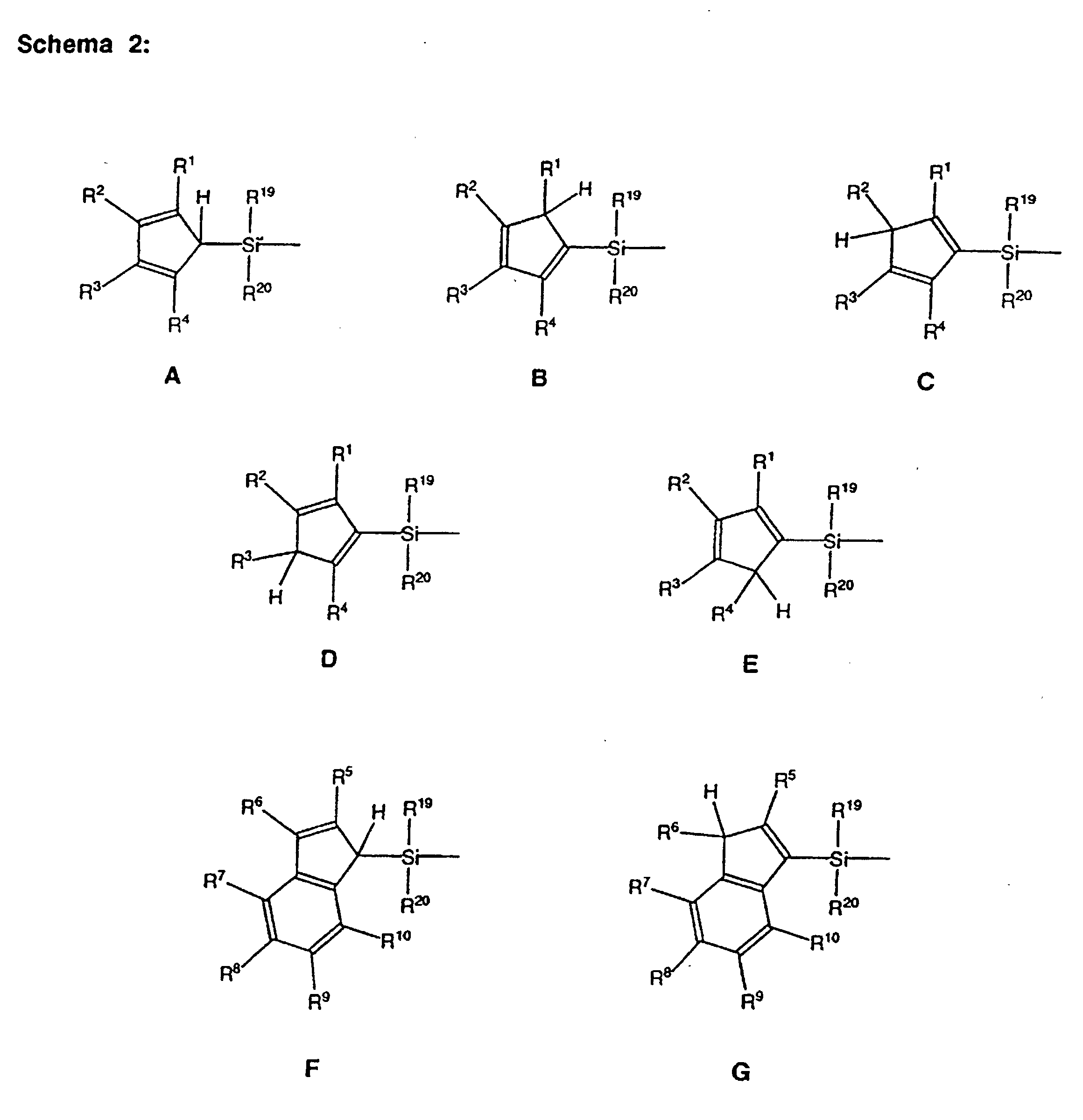 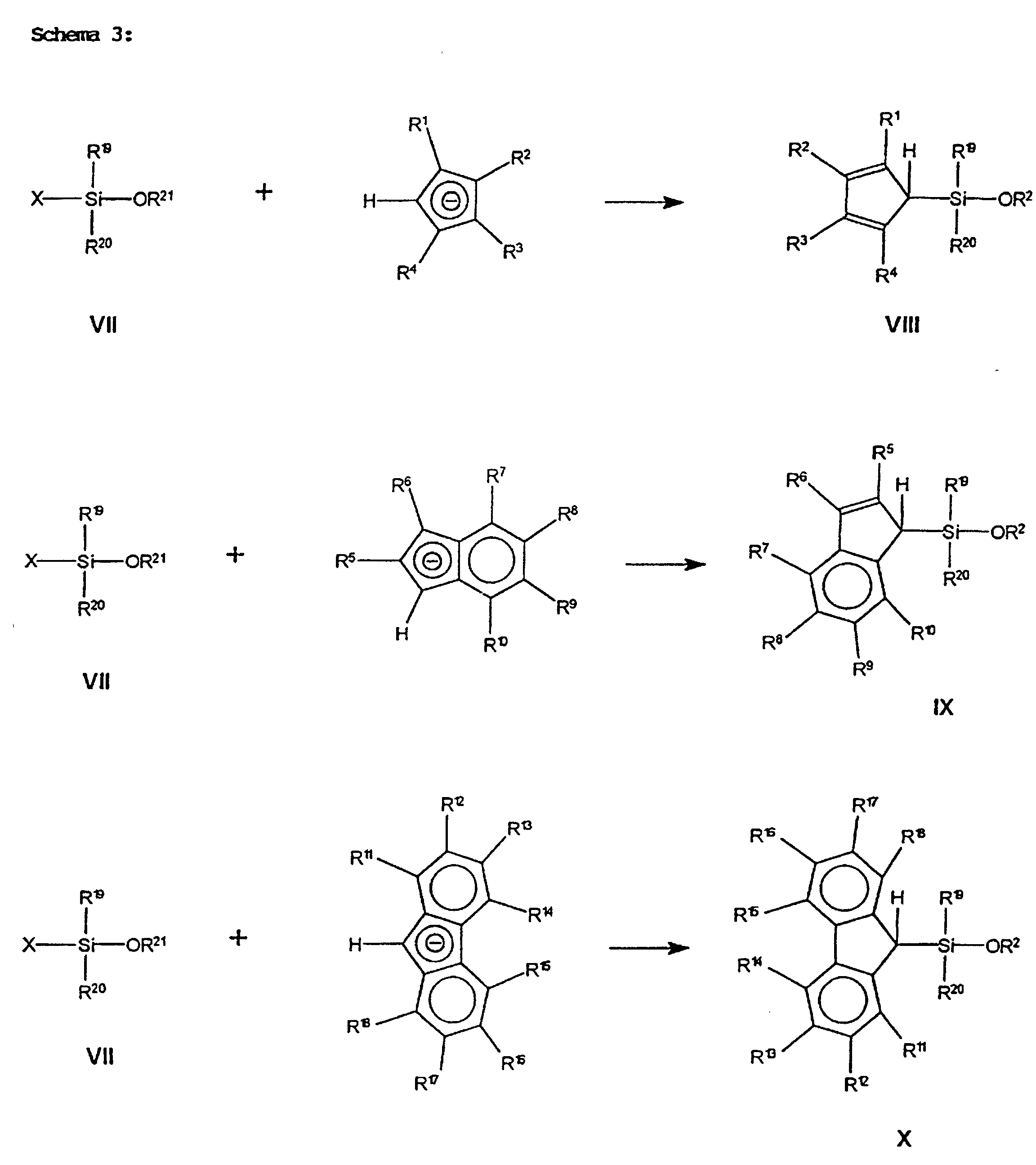 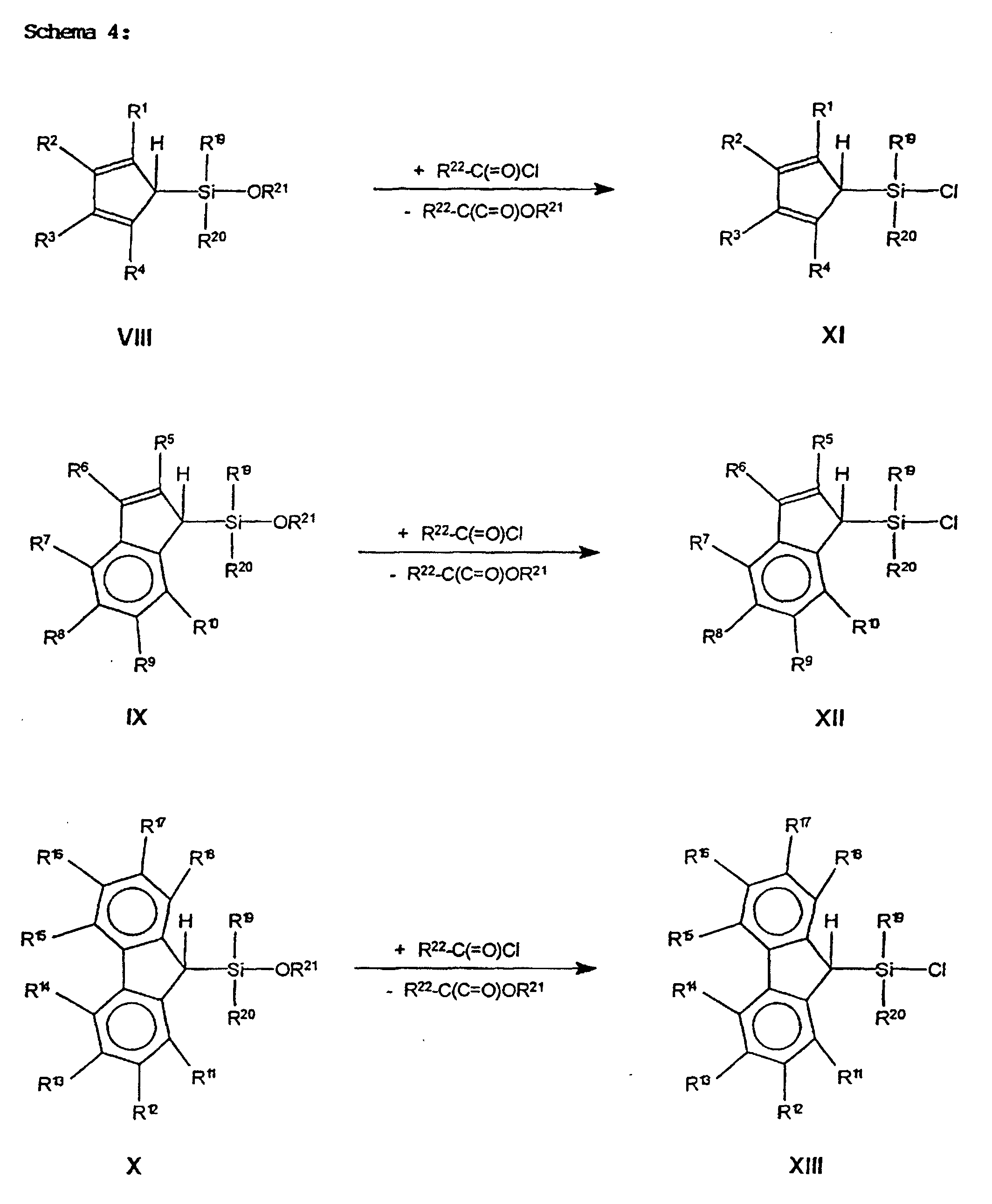 mit R²² = C₁ - bis C₁₀- Alkyl oder C₆- bis C₁₀- Aryl, bevorzugt jedoch Methyl

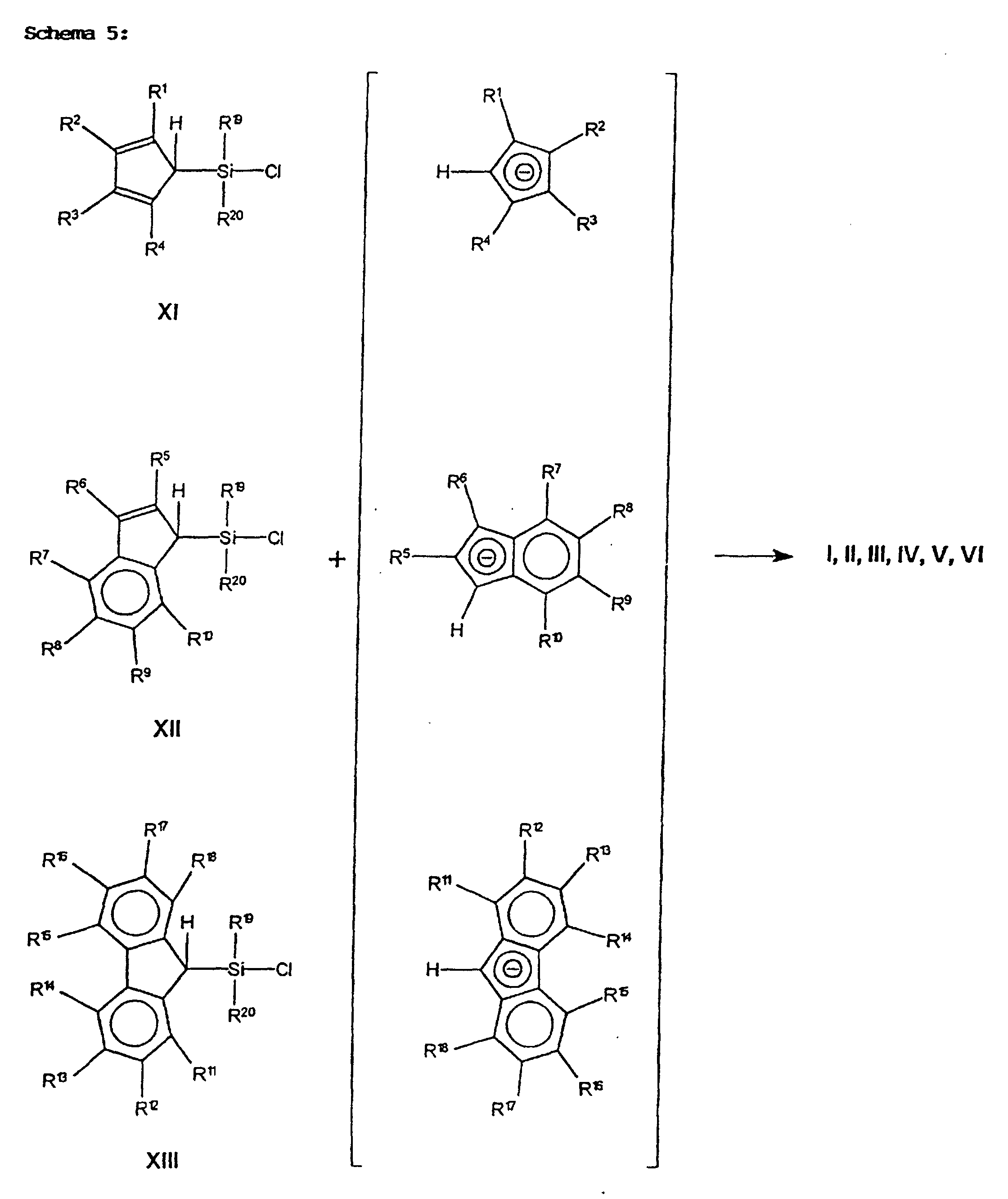

## Patentansprüche

1. Verfahren zur Herstellung von Silizium-verbrückten unsymmetrischen Cyclopentadienyl-, Indenyl- und Fluorenyl-Ligandsystemen, **dadurch gekennzeichnet, daß** man
a) eine Verbindung der Formel VII 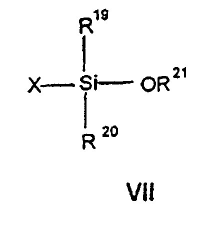 worin X ein Halogen,
R¹⁹, R²⁰ gleich oder verschieden sind und (C₁ - C₂₀)Alkyl, (C₆ - C₁₄)Aryl, (C₇ - C₂₀)Arylalkyl, (C₇ - C₂₀)Alkylaryl, (C₁ - C₁₀)Fluoralkyl, (C₆ - C₁₀)Halogenaryl, (C₂ - C₁₀)Alkinyl,
R²¹ (C₁ - C₁₀)Alkyl bedeuten,
mit substituierten oder unsubstituierten Cyclopentadieniden, Indeniden oder Fluoreniden umsetzt,
b) anschließend die Alkoxygruppe der gemäß a) erhaltenen Verbindung durch ein Halogen substituiert und
c) anschließend die gemäß b) erhaltene Verbindung mit im Vergleich zu a) unterschiedlichen, substituierten oder unsubstituierten Cyclopentadieniden, Indeniden oder Fluoreniden umsetzt.

## Claims

1. Process for preparing silicon-bridged asymmetrical cyclopentadienyl, indenyl and fluorenyl ligand systems, **characterised in that**
a) a compound of formula VII 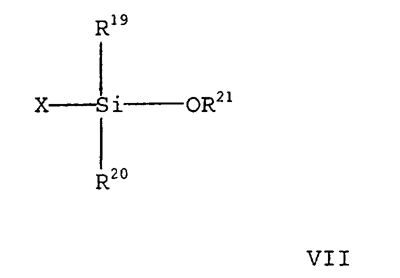 wherein X denotes a halogen,
R¹⁹ and R²⁰ are identical or different and denote (C₁₋₂₀)alkyl, (C₆₋₁₄)aryl, (C₇₋₂₀)arylalkyl, (C₇₋₂₀)alkylaryl, (C₁₋₁₀) fluoroalkyl, (C₆₋₁₀)haloaryl, (C₂₋₁₀)alkynyl,
R²¹ denotes (C₁₋₁₀)alkyl,
is reacted with substituted or unsubstituted cyclopentadienides, indenides or fluorenides,
b) the alkoxy group of the compound obtained in a) is subsequently substituted by a halogen and
c) the compound obtained in b) is subsequently reacted with substituted or unsubstituted cyclopentadienides, indenides or fluorenides different from those in a).

## Revendications

1. Procédé préparation de systèmes de ligands asymétriques cyclopentadiényle, indényle et fluorényle reliés par un pont de silicium, **caractérisé en ce que**
a) on fait réagir un composé de formule VII 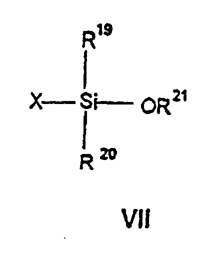 dans laquelle X est un halogène
R¹⁹, R²⁰ sont identiques ou différents et désigne un groupe alkyle (C₁ - C₂₀), aiyle (C₆ - C₁₄), arylalkyle (C₇ - C₂₀), alkylaryle (C₇ - C₂₀), fluoralkyle (C₁ - C₁₀), halogenaryle (C₆ -C₁₀), alkinyle (C₂ - C₁₀),
R²¹ désigne un groupe alkyle (C₁ -C₁₀), avec des cyclopentadiénures, indénures ou fluoréures substitués ou non substitués.
b) on substitue ensuite le groupe alcoxy du composé obtenu selon (a) par un halogène, et
c) on fait ensuite réagir le composé obtenu selon (b) avec des cyclopentadiénures, indénures ou fluorénures substitués ou non substitués, différents de ceux de (a).
